# EUROPÄISCHE PATENTSCHRIFT

(11) **EP 2 850 370 B1**
(45) Veröffentlichungstag und Bekanntmachung des Hinweises auf die Patenterteilung: **12.07.2017**
(21) Anmeldenummer: 13719881.8
(22) Anmeldetag: 03.05.2013
(51) Int. Cl.: B60H 1/22, F24H 3/04, F24H 9/18

(54) **ELEKTRISCHE FAHRZEUGHEIZUNG, INSBESONDERE FÜR FAHRZEUGE MIT HYBRIDANTRIEB ODER MIT ELEKTROANTRIEB**
ELECTRIC VEHICLE HEATER, IN PARTICULAR FOR VEHICLES WITH HYBRID DRIVE OR WITH ELECTRIC DRIVE
CHAUFFAGE ÉLECTRIQUE POUR VÉHICULE, EN PARTICULIER POUR VÉHICULES AVEC PROPULSEUR HYBIRDE OU ÉLECTRIQUE

(30) Priorität: 14.05.2012 DE 102012207988
(43) Veröffentlichungstag der Anmeldung: 25.03.2015
(73) Patentinhaber: Behr-Hella Thermocontrol GmbH, 70469 Stuttgart (DE)
(72) Erfinder: TRAPP, Ralph, 59557 Lippstadt (DE); NAGEL, Dirk, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2013/059276
(87) Internationale Veröffentlichungsnummer: WO 2013/171079

(56) Entgegenhaltungen:
- DE-C1- 10 032 099
- US-A1- 2004 252 986

## Beschreibung

Die Erfindung betrifft eine elektrische Fahrzeugheizung, und zwar insbesondere für ein Fahrzeug mit Hybridantrieb oder mit Elektroantrieb. Bei der elektrischen Fahrzeugheizung kann es sich um eine Luft-Heizung oder aber auch um eine ein Wärmetransportmedium erwärmende Heizung handeln, wobei das Wärmetransportmedium seine thermische Energie beispielsweise über einen Wärmetauscher an eine in das Fahrzeug einströmenden Luftstrom abgibt.

Es ist bekannt, konventionelle Fahrzeuge mit Verbrennungsmotoren mit einer zusätzlichen elektrischen Heizung auszustatten, damit bereits während der Aufwärmphase des Motorkühlmittels ausreichend Energie zur Erwärmung des Fahrzeuginnenraums zur Verfügung steht. Auch bei Fahrzeugen mit Verbrennungsmotoren, bei denen betriebsart- oder konstruktivbedingt das Kühlmittel eine zu geringe Temperatur aufweist, können derartige elektrische Zusatzheizungen eingesetzt werden. Schließlich werden elektrische Fahrzeugheizungen insbesondere in Fahrzeugen mit Hybrid- oder mit Elektroantrieb eingesetzt.

Die bekannten elektrischen Fahrzeugheizungen weisen normalerweise mehrere Heizmodule bzw. Heizstränge auf, die getrennt voneinander angesteuert werden können. Jeder Heizstrang umfasst ein oder mehrere Heizelemente, die pro Heizstrang gleichzeitig angesteuert werden. Die Ansteuerung einzelner Heizelemente eines Heizstrangs getrennt voneinander ist also nicht möglich. Das bedeutet, dass stets der Heizstrang über seine gesamte Länge die gleiche Temperatur aufweist.

Werden elektrische Fahrzeugheizungen mit derartigen Heizmodulen bzw. Heizsträngen in der Weise verbaut, dass die Heizstränge vertikal bzw. im Wesentlichen vertikal ausgerichtet sind, so lässt sich der die elektrische Fahrzeugheizung passierende Luftstrom für Fahrer und für Beifahrer unterschiedlich erwärmen. Eine sogenannte Zweizonen-Heizung lässt sich damit vergleichsweise einfach realisieren.

Die Bauraumsituation kann es allerdings auch erforderlich machen, dass die elektrische Fahrzeugheizung um 90° gedreht gegenüber der zuvor beschriebenen Anordnung verbaut werden muss bzw. verbaut werden sollte. Dann lässt sich der die Heizung passierende Luftstrom bezüglich übereinander angeordneter Strömungsschichten unterschiedlich stark erwärmen. Will man nun eine für Fahrer und Beifahrer getrennte Temperatureinstellung und -regelung über den Heizer realisieren, so muss dies aufwendig mit Temperaturmischklappen o.dgl. Maßnahmen realisiert werden, indem kalte und warme Luft für Fahrer und Beifahrer separat gemischt wird, was einerseits energetisch ungünstig ist und andererseits zu Teilabschottungen des Heizmoduls bzw. der Heizung führen kann. Durch diese Teilabschottungen kann es zu lokalen Überhitzungen auf des Heizmoduls oder der Heizung oder bei der Elektronikkühlung kommen.

Aus DE-C-100 32 099 ist eine elektrische Zusatzheizung zum Erwärmen der in den Innenraum eines Fahrzeugs einströmenden Luft bekannt, die einen Trägermaterialstreifen mit zwei Seitenflächen aufweist, wobei auf mindestens einer der Seitenflächen mehrere streifenförmige Heizelemente angeordnet sind, die zur Einstellung der Heizleistung ansteuerbar sind. Dabei erfolgt diese Ansteuerung kaskadiert, also durch sequentielles Zuschalten weiterer Heizelemente zur (stufenweisen) Veränderung (Erhöhung oder Verringerung) der Heizleistung. Mit anderen Worten ist die Ansteuerung der Heizelemente also insoweit nicht unabhängig voneinander möglich, als dann, wenn zusätzlich zu einem ersten angesteuerten Heizelement ein zweites Heizelement zugeschaltet wird, später das erste Heizelement nicht wieder abgeschaltet werden kann, ohne dass zuvor das zweite Heizelement abgeschaltet worden ist. Mit dieser bekannten elektrischen Zusatzheizung lassen sich also einzelne Heizzonen auf dem Heizelement nicht unabhängig voneinander ansteuern und aufheizen.

Ferner sind aus DE-A-10 2010 000 042 ein elektrisches Heizungselement und ein Verfahren zu dessen Herstellung bzw. aus DE-A-25 31 450 ein Kühlkörper bekannt.

In US-A-2004/0252986 ist ein elektrischer Lamellenkörper-Heizer für Fahrzeuge beschrieben, der eine Vielzahl von Trägerkörpern mit Widerstandsheizbahnen aufweist, wobei sich zwischen jeweils benachbarten Trägerkörpern thermisch leitende Lamellen befinden. Der Heizer ist in zwei Gruppen von Trägerkörpern unterteilt, wobei jede Gruppe in einer anderen Hälfte des Heizers angeordnet ist. Auf diese Weise lässt sich z. B. die linke Hälfte des Heizers bei einer anderen Temperatur als die rechte Heizerhälfte betreiben.

Aufgabe der Erfindung ist es, eine elektrische Fahrzeugheizung, insbesondere für Fahrzeuge mit Hybridantrieb oder mit Elektroantrieb, zu schaffen, mit der sich auf einfache Weise eine unterschiedliche Temperatureinstellung für das an unterschiedlichen Zonen eines Heizmoduls entlangströmenden Medium, z.B. Luft Fahrer und Beifahrer, realisieren lässt. Ein solches Heizmodul kann zur Erwärmung eines (z.B. strömenden) Wärmetransportmediums eingesetzt werden, bei dem es sich insbesondere um ein Gas (wie Luft) oder um eine Flüssigkeit (wie z.B. Wasser) handelt.

Zur Lösung dieser Aufgabe wird mit der Erfindung eine elektrische Fahrzeugheizung, insbesondere für Fahrzeuge mit Hybridantrieb oder mit Elektroantrieb, geschaffen, die mindestens ein Heizmodul aufweist, das versehen ist mit den Merkmalen des Anspruchs 1. Einzelne Ausgestaltungen der Erfindung sind Gegenstand der Unteransprüche.

Sinngemäß wird mit der Erfindung ein Heizmodul für eine elektrische Fahrzeugheizung (Voll- oder Zusatzheizer) vorgeschlagen, bei dem auf einem sich über im Wesentlichen die gesamte Länge des Heizmoduls erstreckenden Trägerkörper zwei nebeneinander liegende Heizzonen definiert sind. Jede Heizzone kann ein oder mehrere Heizelemente aufweisen, um beispielsweise die Heizleistung pro Heizzone verändern zu können. Die Heizelemente können linear oder stufenweise angesteuert werden. Der Trägerkörper selbst weist zwei gegenüber liegende Hauptaußenseitenflächen auf und ist vorzugsweise streifenförmig ausgebildet. Als Material für den Trägerkörper eignet sich beispielsweise ein Keramikmaterial.

Bei Betrachtung in Richtung auf eine der beiden Hauptaußenseitenflächen des Trägerkörpers ist dieser in (mindestens) zwei nebeneinander liegende Heizzonen unterteilt. Jede Heizzone weist mindestens ein Heizelement auf, wobei die Heizelemente unterschiedlicher Heizzonen voneinander unabhängig angesteuert werden können. Hierzu dient eine Ansteuereinheit. Die Ansteuereinheit weist eine elektrische Schaltung auf, wobei mindestens ein Bauelement (wie beispielsweise ein Bipolar-, MOSFET- oder IGBT-Transistor) der elektrischen Schaltung Verlustleistung in Form von Wärme erzeugt. Zweckmäßigerweise befindet sich dieses Bauelement auf dem Trägerkörper, und zwar in einer von den Heizzonen räumlich getrennten Ansteuerzone. Auf diese Weise kann die Verlustwärme zur Temperierung des die Fahrzeugheizung durchströmenden Wärmetransportmediums zusätzlich genutzt werden. Das Heizmodul ist ferner mit einem Wärmetauscher versehen, der mit dem Trägerkörper thermisch gekoppelt ist und dem zu erwärmenden Wärmetransportmedium (Gas oder Flüssigkeit) ausgesetzt ist. Durch den Wärmetauscher wird die Wärmeenergie der Heizelemente gegebenenfalls über eine vergrößerte Oberfläche an die Umgebung, d.h. an das entlangströmende Wärmetransportmedium (z.B. Gas oder Flüssigkeit) abgegeben. Der Wärmetauscher wird nachfolgend auch Kühlkörper genannt.

Die mindestens zwei Heizzonen sind auf einer gemeinsamen Hauptaußenseitenfläche oder auf unterschiedlichen Hauptaußenseitenflächen des Trägerkörpers angeordnet. Schließlich ist es auch möglich, dass auf beiden Hauptaußenseitenflächen des Trägerkörpers den jeweils unterschiedlichen Heizzonen zugeordnete Heizelemente angeordnet sind. Jede Heizzone weist also dementsprechend auf beiden Hauptaußenseitenflächen des Trägerkörpers angeordnete Heizelemente auf. Auf dem Trägerkörper befinden sich zweckmäßigerweise Zuleitungen zu den Heizelementen der einzelnen Heizzonen, die getrennt voneinander ausgeführt sind, so dass sich die den unterschiedlichen Heizzonen zugeordneten Heizelemente auch unabhängig voneinander ansteuern lassen. Mit dem erfindungsgemäß vorgeschlagenen Heizmodul lassen sich also unterschiedliche Bereiche eines Heizstrangs einer elektrischen Fahrzeugheizung unterschiedlich stark erwärmen. Wird nun eine derartige Fahrzeugheizung auf die Weise verbaut, dass die Heizmodule bzw. Heizstränge im Wesentlichen horizontal verlaufen, lässt sich somit das die Fahrzeugheizung durchströmende Wärmetransportmedium in seinem beispielsweise linken Bereich anders temperieren als in seinem rechten Bereich. Damit ist im Falle einer Luftheizung für den Fahrer und den Beifahrer eine unterschiedliche Temperatureinstellung von Fahrer- und Beifahrerseite auf einfache Art und Weise möglich, ohne dass es noch einer "Nachbehandlung" des die Fahrzeugheizung verlassenden Luftstroms bedarf. Vielmehr lässt sich dieser einfach in zwei Teilluftströme für einerseits die Fahrerseite und andererseits die Beifahrerseite unterteilen.

Wird das erfindungsgemäße Heizmodul in vertikaler Ausrichtung verbaut, so ist eine getrennte Temperatureinstellung für Fahrer- und Beifahrerseite ebenfalls denkbar, wobei in diesem Fall von der Möglichkeit, das Heizmodul - über seine Längserstreckung betrachtet - unterschiedlich stark aufheizen zu müssen, kein Gebrauch gemacht werden muss.

Die erfindungsgemäße elektrische Fahrzeugheizung kann also sowohl in vertikaler als auch in horizontaler Richtung hinsichtlich ihrer Temperaturverteilung über die Fläche der Fahrzeugheizung verändert werden. Es lassen sich also beispielsweise vier unterschiedlich beheizbare Teilströme eines Wärmeübertragungsmediums realisieren, die, im Strömungsquerschnitt betrachtet, vier Quadranten entsprechen.

Die Heizelemente sind in Form von Heizleiterbahnen ausgebildet sein, die insbesondere im Pastendruckverfahren auf einem Keramiksubstrat als Trägerkörper realisiert sind. Die Heizleiterbahnen sowie andere Leiterbahnen auf dem Trägerkörper sind durch Abdeckelemente (insbesondere wiederum aus keramischen Materialien) abgedeckt sein, welche einerseits elektrisch isolierend und andererseits elektrisch leitend wirken und die mit Glaslot oder Klebstoff mit dem Trägerkörper verbunden sein können. Alternativ kann die elektrische Isolierung bei gleichzeitiger thermischer Leitfähigkeit auch durch eine Kunststofffolie auf Imid-Basis oder durch Glaspassivierung realisiert sein.

Ferner weist das Keramiksubstrat an mindestens einem Randabschnitt einen über das Abdeckelement vorstehenden Überstandsbereich auf, wobei in dem Überstandsbereich des Keramiksubstrats Bauelemente der Ansteuereinheit für die Heizelemente angeordnet sind.

Weitere vorteilhafte Ausgestaltungen der Erfindung sind in den Unteransprüchen angegeben.

So ist es beispielsweise möglich, dass die elektrische Fahrzeugheizung pro Heizmodul zwei Wärmetauscher aufweist, zwischen denen ein Trägerkörper thermisch mit den Wärmetauschern gekoppelt angeordnet ist.

In weiterer vorteilhafter Ausgestaltung der Erfindung kann vorgesehen sein, dass der Trägerkörper streifenförmig ausgebildet ist und eine Längserstreckung aufweist und dass die beiden Heizzonen in Längserstreckung aufeinanderfolgend auf einer gemeinsamen Hauptaußenseitenfläche des Trägerkörpers oder auf unterschiedlichen Hauptaußenseitenflächen des Trägerkörpers mit oder ohne gegenseitige Überlappung angeordnet sind.

Ferner ist es möglich, dass der Trägerkörper ein Keramiksubstrat aufweist, dass die Heizelemente jeweils als Heizleiterbahnen ausgebildet sind und dass jede Heizleiterbahn von einem oder mehreren Abdeckelementen überdeckt ist, das bzw. die mit dem Keramiksubstrat fest verbunden ist bzw. sind.

Desweiteren ist es möglich, dass das oder jedes Abdeckelement als eine thermisch leitende sowie elektrisch isolierende Kunststofffolie, die insbesondere eine Imidoverbindung oder ein Polyimid aufweist, und/oder dass zwischen jeder mit mindestens einem Heizelement versehenen Hauptaußenseitenfläche und dem Abdeckelement oder zwischen dem Abdeckelement und einem Wärmetauscher eine Wärmeleitpaste angeordnet ist.

Als Abdeckelement eignet sich insbesondere ein Keramikmaterial. Vorzugsweise jedoch wird eine thermisch leitende sowie elektrisch isolierende Kunststofffolie eingesetzt. Diese Folie besteht aus einem Hochleistungskunststoff, der eine durchschlagsfeste elektrische Isolation bei gleichzeitig guter Wärmeleitfähigkeit gewährleistet. Ein derartiges Kunststoffmaterial weist insbesondere eine chemische Imidoverbindung oder ein Polyimid auf. Das Polyimid ist insbesondere ein rein aromatisches Polyimid. Derartige Materialien sind hitzebeständig, weisen geringe Ausgasungen auf, sind darüber hinaus strahlungsbeständig und weisen Isoliereigenschaften auf. Sie sind formstabil im Temperaturbereich von -273 °C bis zu +400 °C. Dabei liegt die Dauereinsatztemperatur bei bis zu 230 °C, wobei kurzzeitig 400 °C möglich sind. Ein bekanntes Material mit rein aromatischen Polyimiden, das sich für den Einsatz bei der Erfindung eignet, wird unter der Bezeichnung Kapton^{®} vertrieben. Alternativ kann als Abdeckmaterial auf das Keramiksubstrat eine Passivierungsschicht aus einem elektrisch isolierenden und thermisch leitenden Material wie z.B. eine Glaspassivierungsschicht aufgebracht werden. Eine Kunststofffolie bzw. eine (glasgelötete) Abdeckkeramikschicht kann dann (muss aber nicht) entfallen. Durch die zuvor genannten Alternativen können elektrische Isolationen bis zu einigen wenigen kV (Prüf-)Spannungen erzielt werden.

Schließlich ist es auch möglich, dass die elektrische Fahrzeugheizung nach der Erfindung mehrere Heizmodule mit jeweils zwei Wärmetauschern umfasst, die zu gegenüberliegenden Seiten eines Heizmoduls abstehende Kühlfahnen aufweisen, und einen Halterahmen, in dem die Heizmodule nebeneinander angeordnet gehalten sind, wobei die Kühlfahnen der einander zugewandt angeordneten Wärmetauscher zweier benachbarter Heizmodule ineinandergreifen, und/oder dass die Kühlfahnen der außenliegenden Wärmetauscher der beiden am weitesten voneinander beabstandeten Heizmodule durch Abdeckabschnitte des Halterahmens zumindest teilweise abgedeckt sind. Alternativ kann der bzw. jeder Wärmetauscher einen Kühlkörper mit mehreren benachbart zueinander angeordneten, abstehenden Kühlfahnen aufweisen, zwischen denen das Wärmetransportmedium hindurchströmen kann, wobei zumindest einige der Kühlfahnen - in Strömungsrichtung des Wärmetransportmediums betrachtet - gegeneinander gekippt ausgerichtete Kühlfahnenabschnitte aufweist.

In weiterer vorteilhafter Ausgestaltung der Erfindung kann vorgesehen sein, dass das Wärmetransportmedium den Wärmetauscher unter Entstehung zweier Teilströme durch- und/oder umströmt, wobei jeder Teilstrom einer anderen Heizzone des Heizmoduls zugeordnet ist.

Schließlich ist es auch möglich, dass mehrere Heizmodule vorzusehen sind, wobei pro Heizmodul jede Heizzone einem anderen der beiden Teilströme zugeordnet ist.

Alternativ zur zuvor beschriebenen Variante können nach der Erfindung auch mehrere Heizmodule vorgesehen sein, von denen eine mindestens ein Heizmodul umfassende erste Gruppe von Heizmodulen jeweils einem von zwei Teilströmen, nämlich einem ersten oder einem zweiten Teilstrom, und von denen eine mindestens ein Heizmodul umfassende zweite Gruppe von Heizmodulen jeweils einem von zwei weiteren Teilströmen, nämlich einem dritten oder einem vierten Teilstrom, zugeordnet ist, wobei die eine Heizzone des mindestens einen Heizmoduls der ersten Gruppe dem ersten Teilstrom, die andere Heizzone des mindestens einen Heizmoduls der ersten Gruppe dem zweiten Teilstrom, die eine Heizzone des mindestens einen Heizmoduls der zweiten Gruppe dem dritten Teilstrom und die andere Heizzone des mindestens einen Heizmoduls der zweiten Gruppe dem vierten Teilstrom zugeordnet ist.

Die erfindungsgemäße elektrische Fahrzeugheizung kann alternativ oder zusätzlich zu den zuvor genannten Merkmalen eines der nachfolgend aufgeführten Merkmale aufweisen:
1. Ein Keramiksubstrat, auf das im Pastendruckverfahren ein- bzw. beidseitig eine Leiterbahn aufgedruckt ist, die als Heizelement dient, wobei eine Wärmeleitfolie, die auf der Leiterbahn aufgebracht ist, diese isoliert. Ein Kühl- bzw. Heizkörper gibt die Wärme der Leiterbahn an die Luft ab.
2. Auf dem Keramiksubstrat kann ein Halbleiterbauelement oder ein anderes Bauelement einer elektrischen Schaltung angeordnet sein, mit dem die Heizleiterbahn ansteuerbar ist. Das Bauelement gibt dabei seine Verlustwärme an das Keramiksubstrat ab, womit wiederum dessen zusätzliche Wärme über den Heiz- bzw. Kühlkörper (Wärmetauscher) an die Umgebung abgegeben wird.
3. Alternativ kann auf der Leiterbahn des Keramiksubstrats eine Abdeckkeramik mit wärmeleitendem Kleber zur Isolation fixiert sein. Die Abdeckkeramik kann aber auch auf das einseitig bedruckte Keramiksubstrat in Wärmeleitpaste gelegt sein und ist dann über Klammern o.dgl. mechanische Befestigungselemente gegebenenfalls zusammen mit dem Kühl-/Heizkörper fixiert.
4. Ein Keramiksubstrat, auf dem im Pastendruckverfahren beidseitig Leiterbahnen als Heizelemente aufgedruckt sind. Die Leiterbahnen sind dabei auf den beiden Hauptaußenseitenflächen des Keramiksubstrats derart angeordnet, dass sie zwei Heizzonen bilden, die in Längserstreckung des insbesondere streifenförmigen Keramiksubstrats betrachtet hintereinander und gegebenenfalls überlappend angeordnet sind. Eine Wärmeleitfolie (beispielsweise Kapton^{®}), eine Glaspassivierung oder eine Abdeckkeramik sind dabei auf den Leiterbahnen angebracht und isolieren diese Leiterbahnen gegenüber der Umgebung, wobei die thermische Leitfähigkeit aufrechterhalten bleibt. Die Wärme des Heizmoduls wird dabei über einen Kühl- bzw. Heizkörper an die umgebende Luft bzw. an die Luftströmung abgegeben.
5. Ein Keramiksubstrat, auf dem im Pastendruckverfahren einseitig zwei Leiterbahnen als Heizelemente aufgedruckt sind. Die Leiterbahnen sind dabei auf den beiden Hauptaußenseitenflächen des Keramiksubstrats derart angeordnet, dass sie zwei Heizzonen bilden, die in Längserstreckung des insbesondere streifenförmigen Keramiksubstrats betrachtet hintereinander und gegebenenfalls überlappend angeordnet sind. Eine Wärmeleitfolie (beispielsweise Kapton^{®}), eine Glaspassivierung oder eine Abdeckkeramik sind dabei auf den Leiterbahnen angebracht und isolieren diese Leiterbahnen gegenüber der Umgebung, wobei die thermische Leitfähigkeit aufrechterhalten bleibt. Die Wärme des Heizmoduls wird dabei über einen Kühl- bzw. Heizkörper an die umgebende Luft bzw. an die Luftströmung abgegeben.
6. Auf dem Keramiksubstrat ist pro Heizzone und gegebenenfalls auch pro Heizelement jeweils ein Halbleiterbauelement angeordnet, mit denen sich die Heizleiterbahnen getrennt voneinander ansteuern lassen. Die Halbleiterbauelemente geben dabei ihre Verlustwärme an das Keramiksubstrat ab und heizen damit ebenfalls die Luft.
7. Darüber hinaus lässt sich das erfindungsgemäße Konzept mit den in WO 2011/120946 A1 und WO 2011/085915 A1 offenbarten Merkmalen kombinieren. Der Gegenstand der beiden zuvor genannten Druckschriften wird insoweit durch Bezugnahme auch zum Gegenstand der vorliegenden Anmeldung.

Die Erfindung wird nachfolgend anhand eines Ausführungsbeispiels sowie unter Bezugnahme auf die Zeichnung näher erläutert. Im Einzelnen zeigen dabei:
- Fig. 1: eine perspektivische Ansicht eines Heizmoduls,
- Fig. 2: das Heizmodul gemäß Fig. 1 in Explosionsansicht,
- Fig. 3: eine Ansicht auf die Unterseite des Heizelements bzw. des Trägerkörpers des Heizelements des Heizmoduls gemäß Fig. 2 und
- Fign. 4 und 5: Ansichten auf zwei elektrische Fahrzeugheizungen mit mehreren Heizmodulen gemäß den Fign. 1 bis 3, die horizontal (siehe Fig. 4) bzw. vertikal (siehe Fig. 5) ausgerichtet sind.

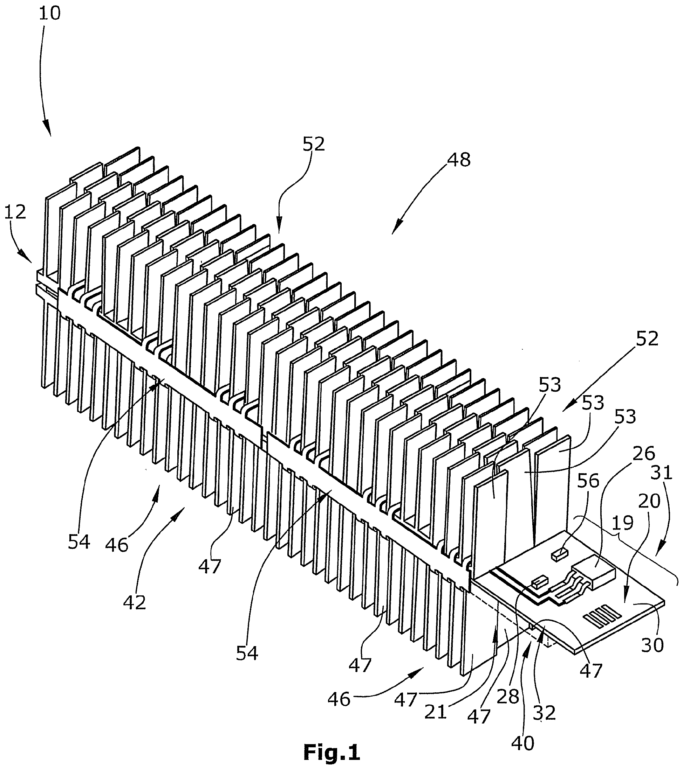

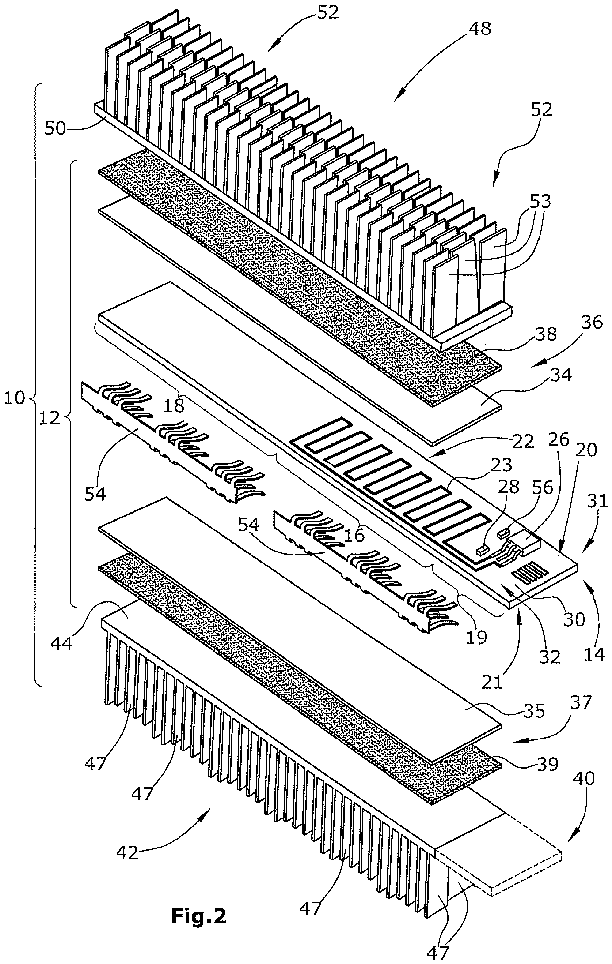

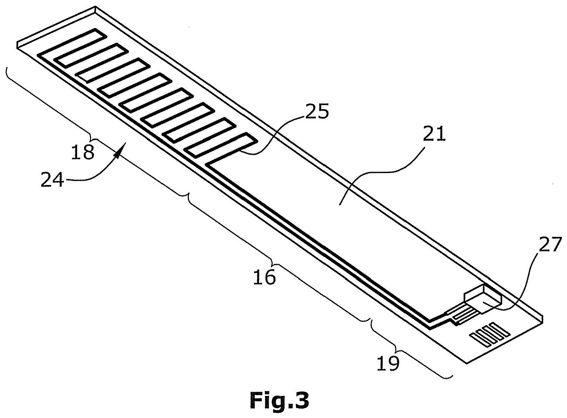

Fig. 1 zeigt perspektivisch ein Heizmodul 10, dessen Aufbau perspektivisch und in Explosionsdarstellung in Fig. 2 am Beispiel einer Luftheizung gezeigt ist. Das Heizmodul 10 ist für den Einsatz in Hochvolt-Bordnetzen von bis zu 1 kV in Fahrzeugen, insbesondere Hybrid- oder Elektrofahrzeugen ausgelegt. Das Heizmodul 10 weist ein zentrales elektrisches Heizelement 12 auf, das mit einem Schichtenaufbau gemäß nachfolgender Beschreibung versehen ist. Das Heizelement 12 umfasst ein Keramiksubstrat 14, das in zwei Heizzonen 16 und 18 und in eine Ansteuerzone 19 unterteilt ist. Beide Heizzonen 16,18 können sich beispielsweise auf der gemäß Fig. 2 oberen Seite 20 des Keramiksubstrats 14 befinden. In diesem Ausführungsbeispiel ist es jedoch so, dass sich eine Heizzone 16 auf der oberen Seite 20 des Keramiksubstrats 14 und die zweite Heizzone 18 auf der unteren Seite 21 des Keramiksubstrats 14 befindet (siehe die Ansicht der Unterseite des Keramiksubstrats 14 gemäß Fig. 3). Die Besonderheit der beiden Heizzonen 16,18 besteht nun darin, dass sie, bezogen auf die Längserstreckung des streifenförmigen Keramiksubstrats 14 nebeneinander liegen, wobei sie sich gegebenenfalls überlappen können. Mit anderen Worten folgen also die beiden Heizzonen 16 und 18 sowie die Ansteuerzone 19 in Längserstreckung des Keramiksubstrats 14 aufeinanderfolgend. Pro Heizzone 16,18 ist auf dem Keramiksubstrat 14 insbesondere im Pastendruckverfahren ein Widerstandsheizelement 22 bzw. 24 in Form eines Widerstandsheizleiters 23 bzw. 25 angeordnet, dessen Strom jeweils von einem Transistor 26,27 gesteuert ist. Die Transistoren 26,27 sowie weitere elektronische Bauteile 28 bilden eine Ansteuereinheit 31 oder sind Bestandteil einer solchen und befinden sich innerhalb der Ansteuerzone 19, die darüber hinaus ein Leiterbahn-Layout 30 mit Kontaktbereichen 32 aufweist.

Die Heizzonen 16,18 sind jeweils von einer elektrisch isolierenden Kapton^{®}-Wärmeleitfolie 34,35 als Abdeckelemente 36,37 überdeckt. Auf den Abdeckelementen 36,37 befindet sich jeweils eine Schicht aus einer Wärmeleitpaste 38 bzw. 39. Jedes Abdeckelement 36,37 endet nahe der Ansteuerzone 19, so dass die Bauelemente innerhalb der Ansteuerzone 19 freiliegen.

Alternativ kann das Heizelement 12 auch einen Verbund aus einem Keramiksubstrat mit aufgedruckten Heizleitern, Glaspassivierungsschichten auf den Heizleitern, Glaslotschichten auf den Glaspassivierungsschichten und Keramikabdeckelementen, die mittels der Glaslotschichten mit den Glaspassivierungsschichten fest verbunden sind, aufweisen. Ein derartiger Verbund ist beispielsweise in WO 2011/085915 A1 beschrieben. Dieser Verbund ist hermetisch dicht sowie elektrisch hoch durchschlagsfest und damit berührungssicher sowie feuchtigkeitsresistent.

Von der bezogen auf Fig. 2 Unterseite 21 des Keramiksubstrats 14 liegt an dem unteren Abdeckelement 37 ein erster Kühlkörper 42 an, der sich über die gesamte Länge von Heizzonen 16,18 und Ansteuerzone 19 erstreckt. Der erste Kühlkörper 42 besteht aus wärmeleitendem metallischen Material wie beispielsweise einer Aluminiumlegierung und umfasst eine Basisplatte 44, von der einzelne Kühlfahnen 46 mit in Strömungsrichtung der Luft (d.h. in Erstreckung des Zwischenraums zwischen den Kühlfahnen 46) betrachtet gegeneinander gekippte Kühlfahnenabschnitte 47 abstehen. Auf dem oberen Keramikabdeckelement 36 liegt ein zweiter Kühlkörper 48 auf, der, wie der erste Kühlkörper 42 mit dem Keramikabdeckelement 36 thermisch gekoppelt ist. Der zweite Kühlkörper 48 weist einen ähnlichen Aufbau wie der erste Kühlkörper 42 auf und umfasst eine Basisplatte 50 mit von dieser abstehenden Kühlfahnen 52 sowie gekippten Kühlfahnenabschnitten 53.

Bei Ausbildung der Widerstandsheizleiter 23,25 beider Heizzonen 16,18 auf einer gemeinsamen Seite des Keramiksubstrats 14 (beispielsweise Oberseite 20 gemäß Fig. 2) kann der erste Kühlkörper 42 eine über die Aufeinanderfolge von Kühlfahnen 46 überstehende Basisplatte 44 aufweisen, wobei deren Überstandsbereich 40 an der Unterseite 21 des Keramiksubstrats 14 im Bereich von dessen Ansteuerzone 19 thermisch gekoppelt anliegt.

Beide Kühlkörper 42,48 sind mit Klammerelementen 54 zusammengehalten und damit beidseitig an dem Heizelement 12 gehalten.

Durch die beiden Kühlkörper 42,48 wird die innerhalb der jeweiligen Heizzone 16 bzw. 18 erzeugte Wärme an die Umgebung abgeführt, wobei das gesamte Heizmodul 10 derart ausgelegt ist, dass die Ansteuerzone 19, obwohl sie unmittelbar neben der Heizzone 16 angeordnet ist, auf einer Temperatur gehalten werden kann, bei der die Funktion der elektrischen Bauteile nicht beeinträchtigt ist. Durch einen Temperaturfühler 56 kann die Temperatur der Ansteuerzone 19 erfasst werden, womit eine Temperaturüberwachung möglich ist. Eine derartige Temperaturüberwachung ist darüber hinaus realisierbar, indem anhand der Stromkennlinie des Widerstandsheizleiters auf die Temperatur des Heizelements 12 geschlossen werden kann. Vorzugsweise erfolgt fortlaufend eine Temperaturüberwachung des Keramiksubstrats. Mit Hilfe dieser Temperaturüberwachung ist eine elektronische Temperatur- und damit Leistungsbegrenzung des Heizelements 12 möglich. Ferner wird der Transistor 26 vor einer Überhitzung geschützt.

Wird das Heizmodul zur Erwärmung einer Flüssigkeit, z.B. Wasser, eingesetzt, ist der Kühlkörper bzw. sind die Kühlkörper beispielsweise als Wärmetauschergehäuse ausgebildet, durch die die Flüssigkeit (gegenüber den elektrischen Komponenten des Heizmoduls 10 getrennt und abgedichtet) strömt. Es ist denkbar, dass die zu erwärmende Flüssigkeit zunächst durch einen ersten Wärmetauscher, der mit einer ersten Seite des Keramiksubstrats 14 thermisch gekoppelt ist, strömt, um anschließend durch einen zweiten Wärmetauscher geleitet zu werden, der mit einer zweiten Seite des Keramiksubstrats 14 thermisch gekoppelt ist. Dadurch, dass der Flüssigkeitsstrom unterschiedliche Heizzonen passiert (nämlich eine auf jeder Seite bzw. mehrere auf jeder Seite des Substrats), die getrennt voneinander ansteuerbar sind, kann durch entsprechende Ansteuerung der unterschiedlichen Heizzonen eine Überhitzung oder gar ein Sieden der Flüssigkeit am Ausgang bzw. im Bereich des Ausgangs der elektrischen Flüssigkeitsheizung vermeiden werden.

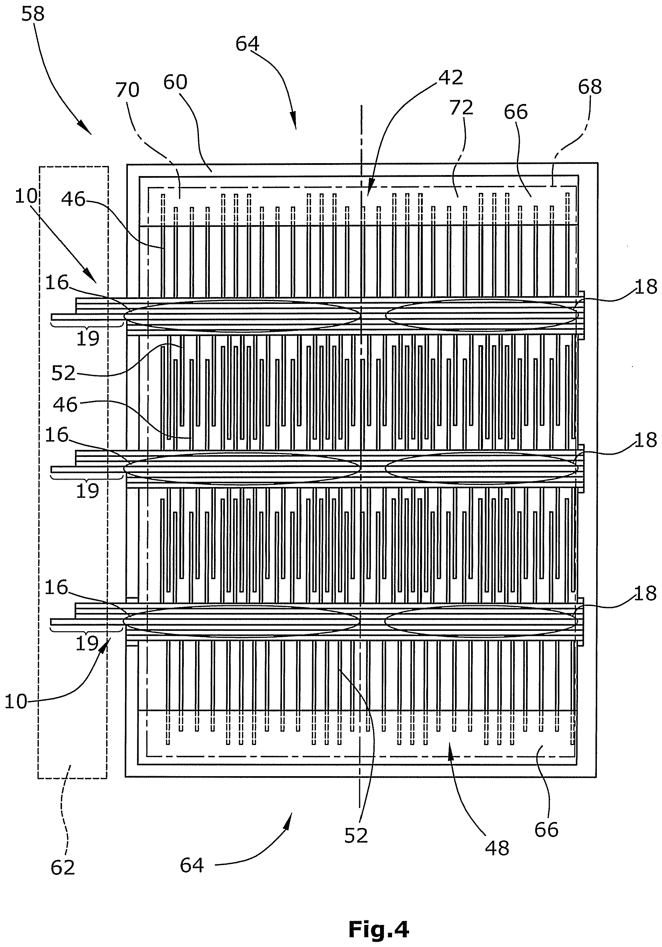

Mehrere Heizmodule 10 gemäß den Fign. 1 bis 3 können nun zu einer elektrischen Heizung 58 verbaut werden. Gemäß Fig. 4 weist die elektrische Heizung 58 einen Rahmen 60 auf, in dem in diesem Ausführungsbeispiel drei übereinanderliegende Heizmodule 10 angeordnet sind. Dabei greifen die Kühlfahnen 46 und 52 der einander benachbart angeordneten Kühlkörper 42 und 48 nebeneinander angeordneter Heizelemente 12 ineinander. Die Kontaktbereiche 32 der Ansteuerzonen 19 der Heizmodule 10 sind mit einer Ansteuer- und Auswerteeinheit 62 elektrisch verbunden. Durch die ineinandergreifenden Kühlfahnen 46,52 weist die elektrische Heizung 58 über ihren Strömungsquerschnitt betrachtet zwischen den benachbarten Heizmodulen 10 einen größeren Strömungswiderstand auf als im Bereich der beiden bezogen auf die elektrische Heizung 58 außenliegenden Kühlkörper 42,48. Um auch in diesen Bereichen einen an den Strömungswiderstand zwischen den Heizmodulen 10 angepassten Strömungswiderstand zu erzielen, weisen die bezogen auf Fig. 4 beidseitig verlaufenden Rahmenabschnitte 64 Abdeckungen 66 auf, die zum Teil die Kühlfahnen 46,52 überdecken.

Gemäß Fig. 4 sind in der elektrischen Heizung 58 drei Heizmodule gemäß den Fign. 1 bis 3 verbaut, wobei sich die drei Heizmodule im eingebauten Zustand horizontal erstrecken. Durch die damit nebeneinander angeordneten Heizzonen 16,18 lässt sich der bei 68 angedeutete Luftstrom in seinem, bezogen auf die Darstellung gemäß Fig. 4, linken Bereich 70 auf eine gegenüber seinem rechten Bereich 72 unterschiedliche Temperatur erwärmen.

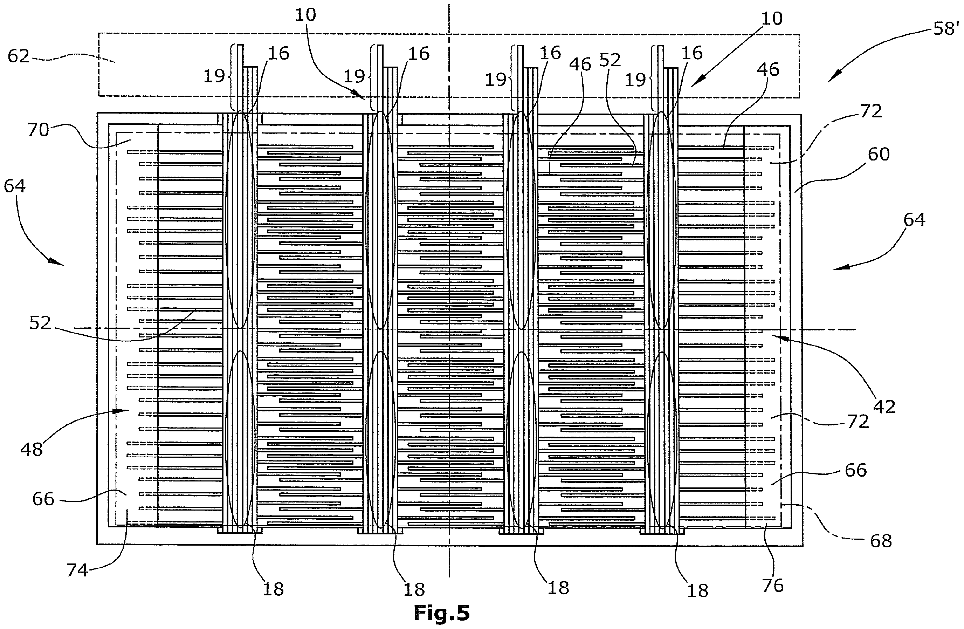

In Fig. 5 ist eine elektrische Zusatzheizung 58' gezeigt, die vier vertikal ausgerichtete Heizmodule 10 umfasst, welche im verbauten Zustand der elektrischen Heizung 58' vertikal ausgerichtet sind. Soweit die einzelnen Bestandteile der Heizung 58' denjenigen der Heizung 58 der Fig. 4 entsprechen, sind sie in Fig. 5 mit den gleichen Bezugszeichen wie in Fig. 4 versehen.

Wiederum lässt sich der bei 68 angedeutete, die elektrische Heizung 58' durchsetzende Luftstrom in seiner bezogen auf Fig. 5 linken Hälfte 70 auf einen gegenüber der rechten Hälfte 72 unterschiedlichen Temperaturwert erwärmen. Hierzu bedarf es nicht notwendigerweise der unterschiedlichen Ansteuerung der beiden Heizzonen 16,18 der einzelnen Heizmodule 10. Vielmehr müssen lediglich die Heizmodule 10, die den beiden unterschiedlichen Luftströmungshälften 70,72 zugeordnet sind, unterschiedlich angesteuert werden. Werden darüber hinaus die Heizzonen 16,18 ebenfalls unterschiedlich angesteuert, lässt sich der die elektrische Heizung 58' durchsetzende Luftstrom (siehe 68) in seinen vier Quadranten 70,72,74,76 unterschiedlich temperieren.

Die Konzepte gemäß den Fign. 4 und 5 lassen sich analog auch auf den Fall übertragen, dass das zu erwärmende Medium eine Flüssigkeit ist. Hier lässt sich also auch eine Rechts/Links-Trennung oder eine über den Querschnitt betrachtete Temperaturschichtung bzw. ein Temperaturgradient realisieren, was insbesondere bei laminaren Strömungen Anwendung finden kann.

### BEZUGSZEICHENLISTE

- 10: Heizmodul
- 12: elektrisches Heizelement des Heizmoduls
- 14: Keramiksubstrat des Heizmoduls
- 16: Heizzone des Keramiksubstrats
- 18: Heizzone des Keramiksubstrats
- 19: Ansteuerzone des Keramiksubstrats
- 20: Oberseite des Keramiksubstrats
- 21: Unterseite des Keramiksubstrats
- 22: Widerstandsheizelement auf dem Keramiksubstrat
- 23: Widerstandsheizleiter
- 24: Widerstandsheizelement auf dem Keramiksubstrat
- 25: Widerstandsheizleiter
- 26: Transistor
- 27: Transistor
- 28: elektrische/elektronische Bauteile der Ansteuereinheit
- 30: Leiterbahn-Layout
- 31: Ansteuereinheit
- 32: Kontaktbereiche
- 36: Abdeckelement des Heizmoduls
- 37: Abdeckelement des Heizmoduls
- 38: Wärmeleitpaste
- 39: Wärmeleitpaste
- 40: Überstandsbereich des Keramiksubstrats
- 42: Kühlkörper
- 44: Basisplatte des Kühlkörpers
- 46: Kühlfahnen des Kühlkörpers
- 47: Kühlfahnenabschnitte
- 48: Kühlkörper
- 50: Basisplatte des Kühlkörpers
- 52: Kühlfahnen des Kühlkörpers
- 53: Kühlfahnenabschnitte
- 54: Klammerelemente
- 56: Temperaturfühler
- 58: elektrische Heizung
- 58': elektrische Heizung
- 60: Rahmen der Heizung
- 62: Auswerteeinheit der Heizung
- 64: Rahmenabschnitte des Rahmens
- 66: Abdeckungen des Rahmens
- 68: Luftstrom durch die Heizung
- 70: linke Hälfte der Luftströmung durch die Heizung
- 72: rechte Hälfte der Luftströmung durch die Heizung
- 74: Quadrant der Luftströmung
- 76: Quadrant der Luftströmung

## Patentansprüche

1. Elektrische Fahrzeugheizung, insbesondere für Fahrzeuge mit Hybridantrieb oder mit Elektroantrieb, mit
- einem Heizmodul (10), das versehen ist mit
- einem Trägerkörper (14), der zwei gegenüberliegende Hauptaußenseitenflächen (20,21) aufweist,
- wobei der Trägerkörper (14) - bei Betrachtung in Richtung auf eine der beiden Hauptaußenseitenflächen (20,21) - in zwei nebeneinander liegende Heizzonen (16,18) unterteilt ist und
- wobei der Trägerkörper (14) in jeder Heizzone (16,18) mit mindestens einem Heizelement (22) versehen ist, und
- einer Ansteuereinheit (31) zur voneinander unabhängigen Ansteuerung der Heizelemente (22),
**gekennzeichnet durch**
- mindestens einen mit dem Trägerkörper (14) thermisch gekoppelten Wärmetauscher (42,48) zur Abgabe von Wärmeenergie an ein Wärmetransportmedium,
- wobei der Trägerkörper (14) ein Keramiksubstrat aufweist, dass die Heizelemente (22) jeweils als Heizleiterbahnen (24) ausgebildet sind und dass jede Heizleiterbahn (24) von einem oder mehreren Abdeckelementen (36,37) überdeckt ist, das bzw. die mit dem Keramiksubstrat fest verbunden ist bzw. sind,
- wobei das Keramiksubstrat an mindestens einem Randabschnitt einen über das Abdeckelement (36,37) vorstehenden Überstandsbereich aufweist und
- wobei in dem Überstandsbereich des Keramiksubstrats und damit in einem außerhalb der Heizzonen (16,18) positionierten Bereich des Trägerkörpers die Bauelemente der Ansteuereinheit (31) für die Heizelemente (22) angeordnet sind.

2. Elektrische Fahrzeugheizung nach Anspruch 1, **dadurch gekennzeichnet, dass** die den beiden Heizzonen (16,18) zugeordneten Heizelemente (22) auf einer gemeinsamen Hauptaußenseitenfläche (20,21) des Trägerkörpers (14) angeordnet sind.

3. Elektrische Fahrzeugheizung nach Anspruch 1, **dadurch gekennzeichnet, dass** das mindestens eine Heizelement (22) der einen Heizzone (16,18) auf der einen Hauptaußenseitenfläche (20,21) des Trägerkörpers (14) und das mindestens eine Heizelement (22) der anderen Heizzone (16,18) auf der anderen Hauptaußenseitenfläche (20,21) des Trägerkörpers (14) angeordnet ist.

4. Elektrische Fahrzeugheizung nach einem der Ansprüche 1 bis 3, **gekennzeichnet durch** zwei Wärmetauscher (42,48), zwischen denen der Trägerkörper (14) angeordnet ist.

5. Elektrische Fahrzeugheizung nach einem der Ansprüche 1 bis 4, **dadurch gekennzeichnet, dass** der Trägerkörper (14) streifenförmig ausgebildet ist und eine Längserstreckung aufweist und dass die beiden Heizzonen (16,18) in Längserstreckung aufeinanderfolgend auf einer gemeinsamen Hauptaußenseitenfläche (20,21) des Trägerkörpers (14) oder auf unterschiedlichen Hauptaußenseitenflächen (20,21) des Trägerkörpers (14) mit oder ohne gegenseitige Überlappung angeordnet sind.

6. Elektrische Fahrzeugheizung nach einem der Ansprüche 1 bis 5, **dadurch gekennzeichnet, dass** das oder jedes Abdeckelement (36,37) als eine thermisch leitende sowie elektrisch isolierende Kunststofffolie, die insbesondere eine Imidoverbindung oder ein Polyimid aufweist, ausgebildet ist oder dass das Abdeckelement (36,37) eine Passivierungsschicht insbesondere aus Glas aufweist und/oder dass zwischen jeder mit mindestens einem Heizelement (22) versehenen Hauptaußenseitenfläche (20,21) und dem Abdeckelement (36,37) oder zwischen dem Abdeckelement (36,37) und einem Wärmetauscher (42,48) eine Wärmeleitpaste (38,39) angeordnet ist.

7. Elektrische Fahrzeugheizung nach einem der Ansprüche 1 bis 6, **dadurch gekennzeichnet, dass** der bzw. jeder Wärmetauscher (42,48) einen Kühlkörper mit mehreren benachbart zueinander angeordneten, abstehenden Kühlfahnen (46,52) aufweist, zwischen denen das Wärmetransportmedium hindurchströmen kann, wobei zumindest einige der Kühlfahnen (46,52) - in Strömungsrichtung des Wärmetransportmediums betrachtet - gegeneinander gekippt ausgerichtete Kühlfahnenabschnitte (47,53) aufweist.

## Claims

1. An electrical vehicle heater, in particular for vehicles having a hybrid drive or having an electric drive, comprising
- a heating module (10) provided with
- a carrier body (14) having two opposite main outside surfaces (20, 21),
- wherein the carrier body (14) - when observed in the direction of one of the two main outside surfaces (20, 21) - is divided into two adjacent heating zones (16, 18), and
- wherein the carrier body (14) is provided with at least one heating element (22) in each heating zone (16, 18), and
- a control unit (31) for controlling the heating elements (22) independently of each other,
**characterized by**
- at least one heat exchanger (42, 48) for dissipating thermal energy to a heat transport medium, the heat exchanger being thermally coupled to the carrier body (14),
- the carrier body (14) comprises a ceramic substrate, the heating elements (22) are respectively formed as heating conductor paths (24), and each heating conductor path (24) is covered with one or a plurality of cover elements (36, 37) fixedly connected with the ceramic substrate,
- wherein, in at least one edge region, the ceramic substrate has a protruding portion projecting beyond the cover element (36, 37), and
- wherein the components of a control unit (31) for the heating elements (22) are arranged in the protruding portion of the ceramic substrate and thus in a region of the carrier body (14) outside the heating zones (16, 18).

2. The electrical vehicle heater of claim 1, **characterized in that** the heating elements (22) associated with the two heating zones (16, 18) are arranged on a common main outside surface (20, 21) of the carrier body (14).

3. The electrical vehicle heater of claim 1, **characterized in that** the at least one heating element (22) of the one heating zone (16, 18) is arranged on one main outside surface (20, 21) of the carrier body (14), and that the at least one heating element (22) of the other heating zone (16, 18) is arranged on the other main outside surface (20, 21) of the carrier body (14).

4. The electrical vehicle heater of one of claims 1 to 3, **characterized by** two heat exchangers (42, 48) between which the carrier body (14) is arranged.

5. The electrical vehicle heater of one of claims 1 to 4, **characterized in that** the carrier body (14) is strip-shaped and has a longitudinal extension, and that the two heating zones (16, 18) are arranged one after the other along the longitudinal extension on a common main outside surface (20, 21) of the carrier body (14) or on different main outside surfaces (20, 21) of the carrier body (14) with or without mutual overlap.

6. The electrical vehicle heater of one of claims 1 to 5, **characterized in that** the or each cover element (36, 37) is designed as a thermally conductive, as well as electrically insulating plastic film which in particular comprises an imido compound or a polyimide, or that the cover element (36, 37) comprises a passivation layer, in particular of glass, and/or that a thermally conductive paste (38, 39) is provided between each of the main outside surfaces (20, 21) which is provided with at least one heating element (22), and the cover element (36, 37) or between the cover element (36, 37) and a heat exchanger (42, 48).

7. The electrical vehicle heater of one of claims 1 to 6, **characterized in that** the or each heat exchanger (42, 48) comprises a cooling body with a plurality of mutually adjacent projecting cooling fins (46, 52) between which the heat transport medium flows through, wherein at least some of the cooling fins (46, 52) have cooling fin sections (47, 53) tilted in opposite directions - seen in the flow direction of the heat transport medium.

## Revendications

1. Chauffage électrique pour véhicule, en particulier pour véhicules avec propulseur hybride ou électrique, comprenant
- un module de chauffage (10) qui est pourvu
- d'un corps de support (14) qui comporte deux faces latérales extérieures principales opposées (20, 21),
- le corps de support (14) étant divisé - vu en regardant sur une des deux faces latérales extérieures principales (20, 21) - en deux zones de chauffage (16, 18) adjacentes et
- le corps de support (14) étant pourvu, dans chaque zone de chauffage (16, 18), d'au moins un élément chauffant (22),
- d'une unité de commande (31) pour commander les éléments chauffants (22) indépendamment les uns des autres,
**caractérisé par**
- au moins un échangeur thermique (42, 48) accouplé thermiquement au corps de support (14) pour transférer de l'énergie calorifique à un fluide caloporteur,
- le corps de support (14) comportant un substrat céramique, les éléments chauffants (22) ayant chacun la forme d'une piste électrique chauffante (24) et chaque piste électrique chauffante (24) étant recouverte d'un ou de plusieurs éléments de recouvrement (36, 37) qui est ou qui sont solidaire(s) du substrat céramique,
- le substrat céramique présentant dans au moins une zone périphérique une zone de dépassement en dépassement de l'élément de recouvrement (36, 37) et
- les composants de l'unité de commande (31) pour les éléments chauffants (22) étant disposés dans la zone de dépassement du substrat céramique et ainsi dans une zone située en dehors des zones de chauffage (16, 18) du corps de support (14).

2. Chauffage électrique pour véhicule selon la revendication 1, **caractérisé en ce que** les éléments chauffants (22) associés au deux zones de chauffage (16, 18) sont disposés sur une face latérale extérieure principale (20, 21) commune du corps de support (14).

3. Chauffage électrique pour véhicule selon la revendication 1, **caractérisé en ce qu'**au moins un élément chauffant (22) de l'une des zones chauffantes (16, 18) est disposé sur l'une des faces latérales extérieures principales (20, 21) du corps de support (14) et **en ce que** ledit au moins un élément chauffant (22) de l'autre zone chauffante (16, 18) est disposé sur l'autre des faces latérales extérieures principales (20, 21) du corps de support (14).

4. Chauffage électrique pour véhicule selon l'une des revendications 1 à 3, **caractérisé par** deux échangeurs thermiques (42, 48) entre lesquels est disposé le corps de support (14).

5. Chauffage électrique pour véhicule selon l'une des revendications 1 à 4, **caractérisé en ce que** le corps de support (14) présente une forme de lamelles et comprend une étendue longitudinale et **en ce que** les deux zones chauffantes (16, 18) sont disposées l'un à la suite de l'autre sur une face latérale extérieure principale (20, 21) du corps de support (14) ou sur des faces latérales extérieures principales (20, 21) différentes du corps de support (14) avec ou sans chevauchement entre les deux.

6. Chauffage électrique pour véhicule selon l'une des revendications 1 à 5, **caractérisé en ce que** le ou chaque élément de recouvrement (36, 37) est conformé comme un film en matière synthétique thermiquement conducteur et électriquement isolant comprenant notamment un composé imide ou un polyimide ou **en ce que** l'élément de recouvrement (36, 37) comprend une couche de passivation notamment en verre et/ou **en ce qu'**une pâte thermo-conductrice (38, 39) est disposée entre chaque face latérale extérieure principale (20, 21) pourvue d'un élément chauffant (22) et l'élément de recouvrement (36, 37) ou entre l'élément de recouvrement (36, 37) et un échangeur thermique (42, 48).

7. Chauffage électrique pour véhicule selon l'une des revendications 1 à 6, **caractérisé en ce que** le ou chaque échangeur thermique (42, 48) comprend un dissipateur thermique avec plusieurs ailettes de refroidissement (46, 52) disposées les unes avoisinant les autres et en saillie entre lesquelles peut passer le fluide caloporteur, au moins quelques-unes des ailettes de refroidissement (46, 52) comprenant des zones d'ailettes de refroidissement (47, 53) inclinées - vu dans la direction de flux du fluide caloporteur - les unes envers les autres.
